# EUROPÄISCHE PATENTSCHRIFT

(11) **EP 2 622 045 B1**
(45) Veröffentlichungstag und Bekanntmachung des Hinweises auf die Patenterteilung: **30.07.2014**
(21) Anmeldenummer: 11767921.7
(22) Anmeldetag: 26.09.2011
(51) Int. Cl.: C10B 27/06

(54) **VORRICHTUNG UND VERFAHREN ZUR AUFSTELLUNG EINES REGELORGANS DES GASDRUCKES EINER KOKSOFENKAMMER OHNE DEHNUNGSBEDINGTE ABWEICHUNG DER REGELANORDNUNG**
DEVICE AND METHOD FOR SETTING UP A CONTROL ELEMENT FOR THE GAS PRESSURE OF A COKE OVEN CHAMBER WITHOUT EXPANSION-INDUCED DEVIATIONS OF THE CONTROL ASSEMBLY
DISPOSITIF ET PROCÉDÉ POUR INSTALLER UN ORGANE DE RÉGLAGE DE LA PRESSION DE GAZ D'UNE CHAMBRE DE FOUR À COKE SANS ÉCART DÛ À L'EXTENSION DU DISPOSITIF DE RÉGLAGE

(30) Priorität: 30.09.2010 DE 102010047025
(43) Veröffentlichungstag der Anmeldung: 07.08.2013
(73) Patentinhaber: ThyssenKrupp Uhde GmbH, 44141 Dortmund (DE)
(72) Erfinder: ÜBERSCHÄR, Kerstin, 45968 Gladbeck (DE); KREBBER, Frank, 45130 Essen (DE); SCHULTE, Helmut, 45259 Essen (DE)
(86) Internationale Anmeldenummer: PCT/EP2011/004795
(87) Internationale Veröffentlichungsnummer: WO 2012/041469

(56) Entgegenhaltungen:
- EP-A1- 2 014 741
- WO-A1-02/066576
- WO-A1-02/094966
- DE-C- 526 974
- DE-C1- 3 712 859

## Beschreibung

Die Erfindung betrifft eine Vorrichtung zur Aufstellung eines Regelorgans zur Kontrolle des Gasdruckes einer Koksofenkammer ohne dehnungsbedingte Abweichungen der Regelanordnung, welche sich in vergleichbaren Vorrichtungen aus dem Stand der Technik aus den hohen Temperaturen und Temperaturunterschieden von Koksofenkammern im Betrieb ergeben. Durch die erfindungsgemäße Vorrichtung und das Verfahren wird verhindert, dass Wasser, welches zur Absperrung, zur Kühlung und zur Entfernung von wasserlöslichen Verunreinigungen aus Steigrohren dient, unkontrolliert aus dem Regelorgan abfließt. Die Erfindung betrifft auch ein Verfahren zur Kontrolle des Gasdruckes einer Koksofenkammer mit der genannten Vorrichtung, wobei der Druck der Koksofenkammer gegen die rohgasführende Vorlage durch Verwendung des genannten Regelorgans ohne dehnungsbedingte Abweichung aus der Regelanordnung geregelt wird.

Bei dem Betrieb von Koksofenkammern entsteht ein Verkokungsgas, welches In der Regel in den Gasraum über dem Kokskuchen gelangt und von dort zur weiteren Verarbeitung geführt wird. Das Verkokungsgas fällt mit einer gewissen Menge an, die sich nach dem zeitlichen Verlauf des Verkokungsvorganges richtet. In der Regel besitzt der zeitliche Verlauf des Gasausstoßes einer Koksofenkammer während des Verkokungszyklusses einen gut vorhersagbaren Verlauf. Da dieser nicht konstant ist, sondern sich nach dem augenblicklichen Stadium des Verkokungsprozesses richtet, kommt es im Verlauf des Verkokungsprozesses zu Schwankungen des Druckes in dem Gasraum der Koksofenkammer.

Man ist jedoch bestrebt, den Gasdruck in dem Gasraum über der Koksofenkammer während der gesamten Dauer der Verkokung möglichst konstant zu halten, um den Verkokungsvorgang besser steuern zu können und um die Weiterverarbeitung des Verkokungsgases zu verbessern. Einige Ausführungsarten ermöglichen auch einen Anstieg des Gasdruckes zum Ende des Verkokungszyklusses. Insbesondere aber ist man bestrebt, den Gasdruck in der Koksofenkammer stets so zu bemessen, dass keine Umgebungsluft in den Ofen hineingesaugt wird, was dadurch geschehen kann, dass durch eine geeignete Regelung des Gasdruckes in der gesamten Koksofenkammer immer ein leichter Überdruck gegenüber der Außenatmosphäre herrscht.

Aus diesem Grund gibt es Regelungsvorrichtungen, mit denen der Druck einer Koksofenkammer während des gesamten Verkokungsvorganges konstant gehalten oder auch geregelt werden kann. Eine beispielhafte Ausführungsart für diesen Zweck besteht darin, das aus der Koksofenkammer auszuführende Verkokungsgas durch eine als Wassertauchung geartete Wassermenge zu leiten, so dass der Gasdruck in der Koksofenkammer durch die Höhe der Wassertauchung und deren Druck geregelt wird. Über der Wassertauchung befindet sich dann der Gasraum einer sogenannten Gasvorlage, die einen Sammeltank für das ausgestoßene Verkokungsgas darstellt und die durch das überlaufende Wasser aus der Tauchtasse stets mit einer Sumpfmenge an Wasser gefüllt ist. Da durch diese Konstruktion eine Trennung des Druckes in der Koksofenkammer und in der Gasvorlage möglich ist, wird eine individuelle Regelung des Koksofenkammerdruckes in Abhängigkeit vom Garungsfortschritt möglich.

Eine beispielhafte Konstruktion und das damit betriebene Verfahren lehrt die EP 649455 B1. Der Gasraum der Koksofenkammer ist mit einem Steigrohr verbunden, welches in einen gekrümmten Steigrohrkrümmer mündet, der wiederum in eine tassenförmige Verschlussklappe eintaucht. Diese tassenförmige Verschlusskappe, die auch als Schwenktasse bezeichnet wird, wird über eine Kohlewasserleitung mit Wasser befüllt. Ein verstellbarer Schieber wird über einen Antrieb geregelt, welcher in Abhängigkeit von den Druckverhältnissen in der Koksofenkammer den Wasserstand in der Schwenktasse auf einem genau bestimmbaren Niveau hält. Da diese Vorrichtung für jede einzelne Koksofenkammer vorgesehen werden kann, kann somit der Gasdruck in jeder einzelnen Koksofenkammer geregelt werden und der Ausstoß an Verkokungsgas über die gesamte Koksofenbatterie oder Koksofenbank über die Zeit gesteuert werden oder konstant gehalten werden. Der Steigrohrkrümmer ist an seinem eintauchenden Ende mit einer speziellen Formgebung versehen, um zu verhindern, dass eine zum Wasserspiegel parallele Kante zu einem Überschwingen der Druckregelung und zu einer Pulsation der Tauchung führt.

Die WO02066576A1 beschreibt eine Vorrichtung zum Regeln eines Gasdruckes in einer Koksofenkammer mit einer mit Flüssigkeit, wie Wasser, befüllbaren Tasse, die eine Abflussöffnung zum Entleeren einer Flüssigkeit aufweist, mit einem in der Tasse mündenden Rohrabschnitt, der im Betrieb mit seinem seine Mündungsöffnung umgebenden Rand abschnittsweise in die Flüssigkeit eintaucht, mit einem Verschlusselement zum Verschließen der Abflussöffnung der Tasse, mit einer Stelleinrichtung und mit einer Steuereinrichtung, welche bei einer Abweichung der Stellung des Verschlusselementes von einer auf den jeweiligen Betriebszustand bezogenen Soll-Stellung solange ein Signal zum Verstellen des Verschlußelementes an die Stelleinrichtung abgibt, bis die Stellung des Verschlußelementes, abgesehen von einer im Toleranzbereich liegenden Abweichung, der jeweiligen Soll-Stellung entspricht.

Die WO02094966A1 beschreibt ein Verfahren zum Betreiben einer Koksofenbatterie, die eine Mehrzahl gleicher Verkokungskammern, eine Rohgasvorlage, und in der Rohgasvorlage angeordnete Drosselvorrichtungen zum individuellen Regeln des Gasdruckes in den Verkokungskammern aufweist, und wobei die Drosselvorrichtungen jeweils eine mit Wasser beaufschlagte Tauchtasse aufweisen, in welchen Tauchrohre enden, welche als Gasleitungen die Verkokungskammern mit der Rohgasvorlage verbinden, und wobei erfindungsgemäß Drosselvorrichtungen verwendet werden, welche einen von einem Stellantrieb vertikal verstellbaren Überlauf zur Regelung des Flüssigkeitsspiegels in der Tauchtasse aufweisen, und für das Verfahren für eine Verkokungskammer, der eine Druckregeleinrichtung zugeordnet ist, die dem zeitlichen Druckverlauf beim Verkoken von Kohle zu Koks zugeordneten Stellsignale für den Stellantrieb in Form einer Stellungs-Zeit-Kurve aufgezeichnet werden, und nach Maßgabe dieser Stellungs-Zeit-Kurve die Stellantriebe der Drosselvorrichtungen gesteuert werden, die Verkokungskammern ohne Druckregeleinrichtungen zugeordnet sind.

Die DE3712859C1 beschreibt eine Abdichtungseinrichtung zwischen dem Steigrohrkrümmer und der Vorlage an einem Verkokungsofen, wobei der Steigrohrkrümmer über einen seitlich erstreckenden Schenkel mit der Oberseite des Steigrohres verbunden ist, während er mit einem zweiten, senkrechten Schenkel auf der Vorlage angeordnet und mittels auf der Außenwandfläche einer Schürze anliegenden Dichtungselementen gegen einen Anschlußstutzen der Vorlage abgedichtet ist, wobei das untere Ende des senkrechten Schenkels des Steigrohrkrümmers in den Anschlußstutzen der Vorlage einfaßt, und mit der Schürze in eine am oberen Ende des Anschlußstutzens der Vorlage gebildete Tauchtässe hineinragt, und erfindungsgemäß die Dichtungselemente gegen die Aussenwandfläche der Schürze eine am Anschlußstutzen mit horizontalem Spielraum federnd gehalterte Stopfbuchsendichtung angreifen, deren die Dichtungselemente aufnehmendes ringförmiges Gehäuse radial in mehrere Segmente unterteilt ist.

Die DE526974C beschreibt eine Steigrohrabsperrvorrichtung zwischen Ofenkammer und Ofenvorlage mit einer fest eingebauten Tauchtasse, die eine von außen verschließbare Bodenöffnung besitzt, wobei die Tauchtasse konzentrisch das untere Ende des Steigrohres umgibt, das von oben her nachgiebig in die Vorrichtung hineinragt.

Beim Betrieb der Koksofenkammern treten hohe Temperaturen auf, die zudem durch den zeitlichen Verlauf des Verkokungsprozesses Schwankungen unterliegen. Auch das Verkokungsgas, welches über das Regelorgan in die Vorlage gesaugt wird, besitzt je nach zeitlichem Vorliegen des Verkokungsvorganges eine unterschiedliche Temperatur. Die Temperaturunterschiede sind durch die Eigenheiten des Verkokungsprozesses mitunter beträchtlich. Die Folge sind Dehnungs- und Setzungsvorgänge in den Metallteilen der gasführenden oder gasdruckregelnden Koksofenkammerbestandteile. Diese Dehnungs- und Setzungsvorgänge führen zu Abweichungen der gasführenden Bestandteile aus ihrer Regelanordnung. Die Folge sind Undichtigkeiten im Gas- und Wasserfluß der gas- und wasserführenden Bestandteile von Koksofenkammern und der druckregelnden Vorrichtungen.

Insbesondere für die Druckregelung des Verkokungsgases, welche durch Ventile und wasserführende Regelvorrichtungen ausgeführt wird, ist dies problematisch, da eine zuverlässige Regelung des Druckes der Koksofenkammer in der Regel unabdingbar ist. Auch stellen Versetzungen und Dehnungen in gas- und wasserführenden Bestandteilen von Koksofenkammern ein Sicherheitsrisiko dar, da diese zu Lufteinlässen in das Verkokungsgas, welches noch einen Brennwert besitzt, führen können. Aus diesem Grund gibt es Vorrichtungen, die einen Ausgleich der Dehnungen und Versetzungen bewirken, die sich im Verlauf eines Verkokungszyklusses ergeben.

Die zum Zeitpunkt der Anmeldung noch nicht offengelegte DE 102009023222.2 lehrt eine Vorrichtung zum Ausgleich von Abweichungen aus der koaxialen Anordnung von Bestandteilen einer Regelanordnung, wobei die Regelanordnung aus Regetorgan, Kronenrohr, und Tauchtasse besteht, und welche zur Kontrolle des Gasdruckes einer Koksofenkammer dient, wobei die Regelanordnung eine Tauchtasse mit einer Wassertauchung enthält, die den Gasraum einer Koksofenkammer gegen die Gasvorlage bzw. nachfolgende Anlagenteile verschließt, und die Höhe des Wasserstandes der Wassertauchung eine Regelung zur Steuerung des Gasdruckes darstellt, und die Regelanordnung weiterhin ein Tauchrohr enthält, welches an seinem in das Wasser der Tauchtasse eintauchenden Ende ein speziell geformtes Kronenrohr ausbildet, und welches ein Regelorgan zur Regelung des Wasserstandes enthält. Durch die Erfindung wird sichergestellt, dass es zu keinen Abweichungen in der konzentrischen Ausrichtung des Regelorgans kommt und der Verschlusstopfen des Regelorgans stets zentrisch und verschließend in den vorgesehen Dichtsitz des Verschlußstopfens der Tauchtasse fährt.

Die Vorrichtung regelt den Gasdruck in der Koksofenkammer und gleicht die temperaturbedingten Abweichungen dadurch aus, dass die Tauchtasse an auslenkbaren Elementen flexibel aufgehängt ist, so dass die Tauchtasse in horizontaler Richtung beweglich ist, und das Kronenrohr an der äußeren Seite oder die Tauchtasse an der inneren Seite im in der Tauchtasse befindlichen Teil Führungselemente enthält, welche zur Führung des Kronenrohres in der Tauchtasse dienen, wobei sich diese zwischen Kronenrohr und Tauchtasse befinden, und welche durch ihre Größe eine genau bestimmte Beweglichkeit innerhalb der Tauchtasse erlaubt. Dadurch lässt sich ein unerwünschtes Durchfließen von Wasser aus der Tauchtasse in die gasführende Vorlage, welches sich durch Versetzungen des Verschlusstopfens bildet, verhindern. Auch das Eindringen von Luft in die Koksofenkammer oder die gasführende Vorlage kann so vermieden werden.

Das Steigrohrsystem mit dem Krümmer kann sich durch diese Regelung bedingt durch die Wärmedehnung jedoch im Lauf des Betriebes stark nach oben verschieben. Während des Betriebes der Koksofenkammer mit dem entsprechenden Regelorgan werden die Tauchtassen nach einmaliger Ausrichtung meist nicht entsprechend der Dehnung nachjustiert, so dass die Öffnungen im Kronenrohr nicht mehr im gewünschten Verhältnis der Wasserdurchlassöffnungen in der Regelvorrichtung zum Wasserdurchlass stehen. Dadurch ergibt sich im Laufe der Betriebszeit ein nicht mehr zuverlässig regelbarer oder berechenbarer Gasfluß in die Vorlage.

Es besteht deshalb die Aufgabe, eine Vorrichtung zur Verfügung zu stellen, welche den Gasdruck in Koksofenkammern durch Regelung des Durchlasses in eine gasführende Vorlage mit einer wasserenthaltenden Tauchtasse regelt, und die Vorrichtung einen Ausgleich der temperaturbedingten Dehnungen oder Versetzungen vornimmt, so dass es nicht mehr zu einem unerwünschten Gas- und Wasserfluß in die Vorlage kommt, wobei die Vorrichtung eine Nachjustierung der Regelanordnung erübrigen soll, so dass eine wartungsfreie und dauerhafte Regelanordnung des Regelorgans zur Kontrolle des Gasflusses erhalten bleibt.

Die vorliegende Erfindung löst diese Aufgabe durch ein Regelorgan, welches aus einem Steigrohr aus der Koksofenkammer mit anschließendem Krümmer und daraus vertikal abwärtsführendem Tauchrohr mit angrenzendem Kronenrohr führt, einer Tauchtasse, wobei die Höhe des Wasserspiegels eine Steuerung zur Regelung des Gasdruckes darstellt, einem Verschlußstopfen, welcher den Wasserspiegel in der Tauchtasse regelt, wobei die Tauchtasse und das Tauchrohr mit einer fest darum angeordneten Umhüllung versehen sind, welche mit der Tauchtasse einen Ringraum bildet, der als Überlauf für das Wasser aus der Tauchtasse in die Vorlage und als Gasweg in die Vorlage geeignet ist, und die Umhüllung mit einem Kranz versehen ist, der in eine ringförmige Tauchung auf der Vorlage eintaucht, so dass Dehnungen oder Versetzungen zwischen der Vorlage und der Umhüllung ausgeglichen werden können.

Durch diese Vorrichtung ist eine Versetzung oder Dehnung zwischen Tauchrohr und Tauchtasse durch Temperaturunterschiede nicht möglich, während die Dehnungen, welche sich zwischen Vorlage und Steigrohr mit Krümmer ergeben, durch eine kranzförmige Umrandung, welche in eine Tauchung mündet, aufgefangen werden. Dadurch ist der wasser- und gasflußregelnde Teil des Regelorgans wartungsfrei stets in derselben Anordnung. Dadurch wird ebenfalls ein unerwünschter Gas- oder Wasserdurchfluß in die Vorlage vermieden.

Beansprucht wird insbesondere eine Vorrichtung zur Aufstellung eines Regelorgans zur Kontrolle des Gasdruckes einer Koksofenkammer ohne dehnungsbedingte Abweichung aus der Regelanordnung, umfassend
- ein Steigrohr, welches aus einer Koksofenkammer vertikal aufsteigend herausführt, und welches mit einem Krümmer verbunden ist, welcher von dem Steigrohr in seitliche Richtung abzweigt und vertikal abwärts in ein Tauchrohr übergeht, welches endseitig als Kronenrohr mit zackenförmigen oder lückenförmigen Einformungen in den Rändern ausgestattet und einem Einlass für Wasser ausgestattet ist, und
- eine Tauchtasse, die einen abwärts zulaufenden Boden besitzt, und die vom Boden ausführend an dessen unteren Ende einen Auslass für das Wasser enthält, und welche nach oben offen ist, und
- einen Verschlusstopfen, welcher durch das Tauchrohr führt, und welcher den Auslass aus der Wassertauchung der Tauchtasse in die daruntergelegene Vorlage regelbar verschließt, und
- eine rohgasführende Vorlage, in welche das Wasser aus der Tauchtasse durch Überlauf oder Öffnen des Verschlusstopfens fließt,
   und welche dadurch gekennzeichnet ist, dass
- die Tauchtasse und das Tauchrohr mit dem endseitigen Kronenrohr mit einer fest angeordneten Umhüllung versehen sind, welche mit der Tauchtasse einen Ringraum bildet, der als Überlauf für das Wasser und als Gasweg aus der Tauchtasse in die Vorlage geeignet ist, und
- die Umhüllung mit einem Kranz versehen ist, der in eine ringförmige Tauchung auf der Vorlage eintaucht, so dass Dehnungen oder Versetzungen zwischen der Vorlage und der Umhüllung ausgeglichen werden können.

Die Umhüllung oder der umhüllende Formkörper können aus jedem beliebigen Material gefertigt sein. Diese ist besonders vorteilhaft aus Gusseisen oder einem Gussstahl gefertigt. In einer einfacheren Ausführungsform kann diese aber auch aus einem Blechkörperformteil gebildet werden.

Die Verbindung zwischen der Umhüllung und dem Tauchrohr erfolgt beispielhaft durch eine Flanschverbindung. Dies bietet den Vorteil, dass die Umhüllung mit der Tauchtasse abnehmbar ist, und die Tauchtasse zu Inspektionszwecken leicht zugänglich ist. Die Umhüllung kann beliebig an dem Tauchrohr befestigt werden. Möglich ist beispielsweise auch eine dauerhafte Schweißverbindung. Auch die Anordnung der Befestigung kann beliebig ausgeführt sein. Die Umhüllung kann beispielsweise in vertikalem Sinn in der Mitte des Tauchrohres aufgehängt sein, diese kann aber auch direkt unterhalb des Steigrohrkrümmers montiert sein. Die Umhüllung kann beispielsweise in Anordnung zu dem Tauchrohr konzentrisch zu diesem aufgehängt sein, so dass sich in einer beliebigen Ebene in alle Richtungen der gleiche Abstand zu diesem ergibt. Die Umhüllung kann ebenfalls beliebig geformt sein, läuft aber bevorzugt nach unten hin konisch zu und besitzt am unteren Ende eine Länge, welche über das Ende der Tauchtasse hinausragt.

Die Tauchtasse kann zur vertikalen Aufhängung mit dem Tauchrohr oder mit der Umhüllung verbunden sein. Dies kann beispielhaft über Stangen, Flansche oder auch Bleche geschehen. Die Tauchtasse kann zur vertikalen Befestigung aber auch über Haltestangen an einer Ringscheibe des Tauchrohres aufgehängt sein. Die Haltestangen sind dann beispielhaft am oberen Ende in der Ringscheibe befestigt, der das Tauchrohr an beliebiger Stelle umgibt. Die Zahl der Haltestangen kann beliebig sein, beträgt jedoch mindestens drei. Die Haltestangen sind aus einem beliebigen Material gefertigt. Dies können beispielhaft Stahlstifte sein, dies können aber auch Metallbolzen, Rohrstücke oder Gussrippen sein. Diese sind vorteilhaft über Verschraubungen oder Nieten befestigt.

In einer Ausführungsform der Erfindung ist die gasführende Vorlage am oberen Ende mit einer Gasklappe ausgerüstet, die sich am oberen Ende der Vorlage befindet, und mit der die Vorlage gegen die Umhüllung und Tauchtasse absperrbar ist. Diese kann beliebig ausgeführt sein. Diese kann in einer beispielhaften Ausführungsform als einfache Klappe ausgeführt sein, welche am oberen Ende der Vorlage über ein Drehlager aufgehängt ist, und welche zum Schließen nach oben schwenkt. Diese kann aber auch als seitlich verschwenkbare Klappe ausgeführt sein. Durch das Vorhandensein einer Klappe kann die Vorlage bei Entfernung der Tauchtasse oder im Fall einer Betriebsstörung abgesperrt werden, so dass keine Luft in die Vorlage gelangt. Ein Eindringen von Luft in die rohgasführende Gasvorlage ist aus verfahrenstechnischen und sicherheitstechnischen Gründen unerwünscht.

Der Verschlusstopfen kann beliebig geartet sein. Dieser besteht jedoch in einer bevorzugten Ausführungsform aus einem Siphon, einem verstellbaren Schieber, und einem Ablaufrohr, wobei über den verstellbaren Schieber der Wasserspiegel in der Tauchtasse geregelt wird, oder ein Abfluss durch das Ablaufrohr in die Gasvorlage, was über die Stellung eines in dem Verschlusstopfen enthaltenen vertikal verschließbaren Schiebers und einem damit verbundenen Bewegungsmechanismus regelbar ist. Der Bewegungsmechanismus besteht typischerweise aus einer Stange, welche mit einem Antrieb verbunden ist.

Beansprucht wird auch ein Verfahren, welches zur Regelung des Druckes der Koksofenkammer gegen den Druckunterschied der Vorlage durch Verwendung des genannten Regelorgans zur Kontrolle des Gasdruckes einer Koksofenkammer ohne dehnungsbedingte Abweichung aus der Regelanordnung dient. Dieses nutzt die vorstehend genannte Vorrichtung als Regelorgan. Beansprucht wird insbesondere ein Verfahren zum Betreiben einer Koksofenbatterie oder Koksofenbank mit einer Mehrzahl von Koksofenkammern, einer rohgasführenden Rohgasvorlage und in der Rohgasvorlage angeordneten Drosselvorrichtungen zum individuellen Regeln des Gasdruckes in den Verkokungskammern, wobei
- die Drosselvorrichtungen jeweils eine mit Wasser beaufschlagte Tauchtasse mit einem verschließbaren Ablauf aufweisen, und
- die Verkokungskammern mit der Rohgasvorlage durch Gasleitungen verbunden sind, die als Tauchrohre in den Tauchtassen der Drosselvorrichtungen enden, und
- Drosselvorrichtungen verwendet werden, die einen von einem Stellantrieb vertikal verstellbaren Überlauf zur Regelung des Flüssigkeitsspiegels in der Tauchtasse aufweisen,
   und welches dadurch gekennzeichnet ist, dass
- die Regelung des Druckes in der Koksofenkammer durch Verwendung eines Regelorgans zur Kontrolle des Gasdruckes einer Koksofenkammer ohne dehnungsbedingte Abweichung der Tauchtasse und der Drosselvorrichtung aus der Regelanordnung geschieht, wobei der Dehnungsausgleich gegen die Vorlage durch die Eintauchung eines an der Umhüllung angeordneten umlaufenden Kranzes in eine Tauchung vorgenommen wird.

Das Verfahren kann auch automatisiert werden. Hierzu wird beispielhaft die Druckregelung in mindestens einer Koksofenkammer über eine Messeinrichtung vorgenommen, die den Wasserzulauf in die Tauchtasse in Abhängigkeit vom Innendruck der Koksofenkammer regelt. Diese Automatisierung kann an einer Koksofenkammer durchgeführt werden, wird jedoch bevorzugt an mehreren oder allen Koksofenkammern einer Koksofenbank oder Koksofenbatterie vorgenommen.

Das Verfahren und die erfindungsgemäße Vorrichtung werden typischerweise zum Betrieb von konventionellen Koksöfen verwendet.

Die ringförmige Tauchung, welche zum Ausgleich der Dehnungen und Setzvorgänge zwischen Vorlage und Steigrohr bzw. Tauchrohr dient, ist in einer beispielhaften Ausführungsform mit Wasser gefüllt. Die Tauchung kann jedoch auch mit einer Füllung aus Bitumen versehen sein, was beispielsweise für die Anwendung im Hochtemperaturbereich erwünscht sein kann. Die Tauchung kann weiterhin mit einer Füllung versehen sein, die eine Silikonverbindung enthält.

Die Erfindung besitzt den Vorteil, eine Vorrichtung zur Verfügung zu stellen, welche den Gasdruck in einer Koksofenkammer durch einen veränderbaren Wasserspiegel in einer Tauchtasse regelt, wobei das aus der Koksofenkammer führende Tauchrohr mit dem dazugehörigen Regelorgan für den Wasserstand und für den Gasdruck unabhängig von Dehnungs- oder Setzvorgängen stets in der dafür vorgesehenen Regelanordnung verbleibt, ohne dass wartungsintensive Nachjustierungen erforderlich sind. Die Erfindung besitzt weiterhin den Vorteil, an der Vorlage mit einer Gasklappe ausgerüstet werden zu können. Durch das Vorhandensein einer Gasklappe kann die Vorlage bei Entfernung der Tauchtasse oder im Fall einer Betriebsstörung abgesperrt werden, so dass keine Luft in die Vorlage gelangt.

Die Erfindung wird anhand von drei Zeichnungen erläutert, wobei diese Zeichnungen nur Ausführungsbeispiele für die Konstruktion der erfindungsgemäßen Vorrichtung darstellen, welche nicht auf diese beschränkt sind.

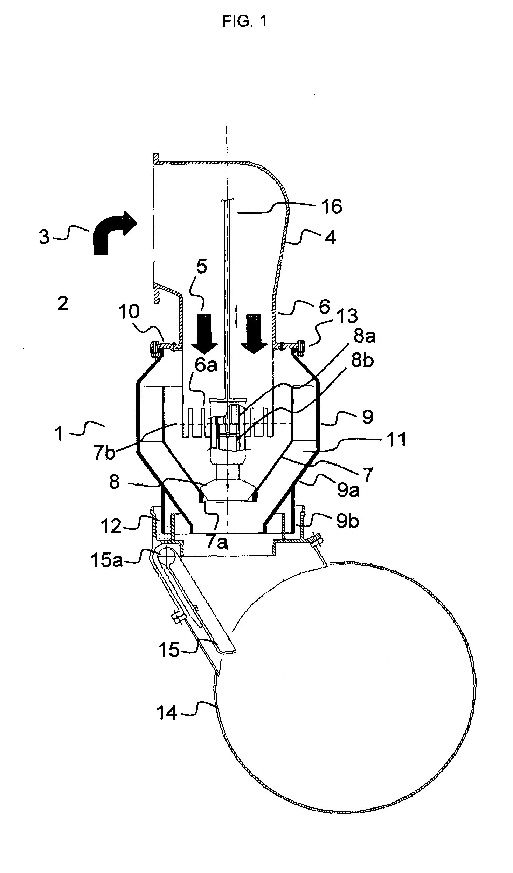

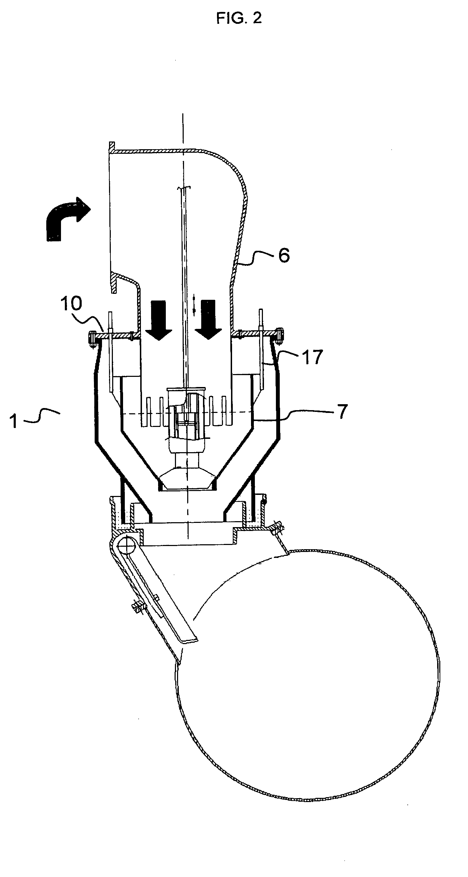

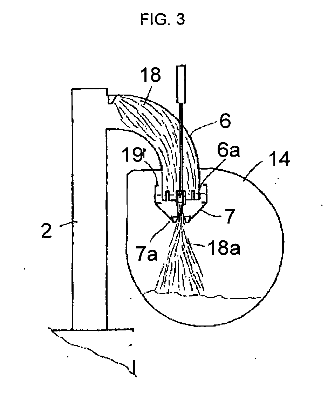

FIG. 1 zeigt eine erfindungsgemäße Vorrichtung, in der die Tauchtasse direkt an der Umhüllung und an dem Tauchrohr befestigt ist. FIG. 2 zeigt eine erfindungsgemäße Vorrichtung, in der die Tauchtasse über Haltestangen an einer an dem Tauchrohr befestigten, horizontal angeordneten Ringscheibe befestigt ist. FIG. 3 zeigt eine Vorrichtung aus dem Stand der Technik mit der Anordnung auf der Koksofenkammer.

FIG. 1 zeigt eine erfindungsgemäße Vorrichtung (**1**) zum Regeln des Koksofenkammerdruckes mit einem hier nicht sichtbaren Steigrohr (**2**), welches die Verkokungsgase **(3)** aus einer Koksofenkammer mit einem daran angeordneten Krümmer **(4)** ausführt, wobei nur der Krümmer **(4)** sichtbar ist, welcher an dem Steigrohr **(2)** angeordnet ist, und welcher die Verkokungsgase **(3)** um 180° in abwärts führende Richtung **(5)** lenkt. An den Krümmer **(4)** schließt sich das abwärtsführende Tauchrohr **(6)** an, welches endseitig ein Kronenrohr **(6a)** ist, das mit zackenförmigen oder lückenförmigen Einformungen in den Rändern ausgestattet ist. Das Tauchrohr **(6)** mit dem endseitigen Kronenrohr **(6a)** mündet in eine Tauchtasse **(7),** welche nach unten konisch auf einen Wasserauslauf **(7a)** zuläuft, und welche einen veränderbaren Wasserspiegel **(7b)** enthält. Durch das Tauchrohr **(6)** führt mittig ein Verschlusstopfen **(8),** der in den Verschluss der Tauchtasse **(7)** mündet, und der den Wasserauslauf **(7a)** verschließt. Das Tauchrohr **(6)** und die Tauchtasse **(7)** sind erfindungsgemäß von einer Umhüllung **(9)** umgeben, welche an dem Tauchrohr **(6)** über eine Ringscheibe **(10)** fest montiert ist. Die Umhüllung **(9)** bildet mit der Tauchtasse **(7)** einen Ringraum **(11),** der als Überlauf für das Wasser aus der Tauchtasse **(7)** und als Gasweg für das Verkokungsgas **(3)** dient. Die Umhüllung **(9)** läuft ebenfalls nach unten konisch zu, wobei an dem unteren, sich verjüngenden Teil **(9a)** ein Kranz **(9b)** angeordnet ist, welcher in eine ringförmige Tauchung **(12)** eintaucht. Die Umhüllung **(9)** ist über Flanschverbindungen **(13)** erfindungsgemäß fest mit dem Tauchrohr **(6)** verbunden. Dadurch ist die Umhüllung **(9)** mit der Tauchtasse **(7)** gegenüber der rohgasführenden Vorlage **(14)** verschiebbar. Die Tauchtasse mit der Umhüllung mündet in eine rohgasführende Vorlage **(14),** in der die Verkokungsgase **(3)** gesammelt werden. Bei Herausnahme des Verschlusstopfens **(8)** aus der Tauchtasse **(7)** fließt Wasser in die Vorlage **(14),** wobei über den Wasserstand in der Wassertauchung **(7b)** der Gasdruck in der Koksofenkammer geregelt wird. Die Vorlage **(14)** ist am oberen Ende mit einer Klappe **(15)** ausgestattet, mit welcher die Vorlage **(14)** nach oben abschließbar ist. Dadurch lässt sich der Gasraum der Koksofenkammer gegen die Vorlage **(14)** oder die Gasvorlage gegen die Atmosphäre absperren. Die Klappe **(15)** wird durch Hochklappen über das Drehlager **(15a)** geschlossen. Der Wasserspiegel in der Wassertauchung **(7b)** der Tauchtasse **(7)** wird über den Verschlussstopfen **(8)** geregelt, der über eine Bewegungsstange **(16)** mit einem Bewegungsmechanismus aus dem Wasserauslauf **(7a)** ziehbar ist. Bei Herausziehen läuft das Wasser dem Wasserauslauf **(7a)** in die Vorlage **(14)** ab. Der Verschlussstopfen **(8)** ist mit einem Siphon **(8a)** und mit einem vertikal verstellbaren Schieber **(8b)** ausgestattet, durch den die Höhe des Wasserspiegels **(7b)** in der Tauchtasse regelbar ist.

FIG. 2 zeigt die gleiche Vorrichtung, in denen die Tauchtasse **(7)** fest mit Haltestangen **(17)** befestigt ist, welche in einer Ringscheibe **(10)** montiert sind, die an dem Tauchrohr **(6)** angeordnet ist.

FIG. 3 zeigt eine Vorrichtung aus dem Stand der Technik, die die Anordnung der Vorrichtung an der Koksofenkammer zeigt. Zu sehen ist das Steigrohr **(2),** das Tauchrohr **(6),** das Kronenrohr **(6a),** die Tauchtasse **(7)** und die Vorlage **(14).** In das Tauchrohr **(6)** strömt im Bereich des Krümmers Wasser **(18),** welches durch den Wasserauslauf **(7a)** in die Vorlage **(14)** strömt. Zu sehen ist das auslaufende Wasser **(18a).** Die Tauchtasse **(7)** ist über eine Aufhängung **(19)** an der Vorlage **(14)** befestigt. Das Tauchrohr **(6)** mündet in ein Kronenrohr **(6a).**

### Bezugszeichenliste

- 1: Vorrichtung zum Regeln des Koksofenkammerdruckes, Drosselvorrichtung
- 2: Steigrohr
- 3: Verkokungsgase
- 4: Krümmer
- 5: Abwärtsströmende Verkokungsgase
- 6: Tauchrohr
- 6a: Kronenrohr
- 7: Tauchtasse
- 7a: Wasserauslauf
- 7b: Wassertauchung mit Wasserspiegel
- 8: Verschlusstopfen
- 8a: Siphon
- 8b: Verstellbarer Schieber
- 9: Umhüllung
- 9a: Nach unten verjüngender Teil der Umhüllung
- 9b: Kranz
- 10: Ringscheibe
- 11: Ringraum
- 12: Ringförmige Tauchung
- 13: Flanschverbindung
- 14: Vorlage
- 15: Klappe
- 15a: Drehlager der Klappe
- 16: Bewegungstange des Verschlusstopfens
- 17: Haltestange
- 18: Einströmendes Wasser
- 18a: Ausströmendes Wasser
- 19: Aufhängung der Tauchtasse

## Patentansprüche

1. Vorrichtung (1) zur Aufstellung eines Regelorgans zur Kontrolle des Gasdruckes einer Koksofenkammer ohne dehnungsbedingte Abweichung aus der Regelanordnung, umfassend
• ein Steigrohr (2), welches aus einer Koksofenkammer vertikal aufsteigend herausführt, und welches mit einem Krümmer (4) verbunden ist, welcher von dem Steigrohr (2) in seitliche Richtung abzweigt und vertikal abwärts in ein Tauchrohr (6) übergeht, welches.endseitig als Kronenrohr (6a) mit zackenförmigen oder lückenförmigen Einformungen in den Rändern ausgestattet und einem Einlass für Wasser (18) ausgestattet ist, und
• eine Tauchtasse (7), die einen abwärts zulaufenden Boden besitzt, und die vom Boden ausführend an dessen unteren Ende einen Auslass für das Wasser (18a) enthält, und welche nach oben offen ist, und
• einen Verschlusstopfen (8), welcher durch das Tauchrohr (6) führt, und welcher den Auslass aus der Wassertauchung (7b) der Tauchtasse (7) in die daruntergelegene Vorlage (14) regelbar verschließt, und
• eine rohgasführende Vorlage (14), in welche das Wasser aus der Tauchtasse (7) durch Überlauf oder Öffnen des Verschlusstopfens (8) fließt,
**dadurch gekennzeichnet, dass**
• die Tauchtasse (7) und das Tauchrohr (6) mit dem endseitigen Kronenrohr (6a) mit einer fest angeordneten Umhüllung (9) versehen sind, welche mit der Tauchtasse (7) einen Ringraum (11) bildet, der als Überlauf für das Wasser und als Gasweg (5) aus der Tauchtasse (7) in die Vorlage (14) geeignet ist, und
• die Umhüllung (9) mit einem Kranz (9b) versehen ist, der in eine ringförmige Tauchung (12) auf der Vorlage (14) eintaucht, so dass Dehnungen oder Versetzungen zwischen der Vorlage (14) und der Umhüllung (9) ausgeglichen werden können.

2. Vorrichtung nach Anspruch 1, **dadurch gekennzeichnet, dass** die Umhüllung (9) aus einem Gusskörper oder Blechkörperformteil gebildet wird.

3. Vorrichtung nach einem der Ansprüche 1 oder 2, **dadurch gekennzeichnet, dass** die Verbindung zwischen Umhüllung (9) und Tauchrohr (6) durch eine Flanschverbindung (13) erfolgt.

4. Vorrichtung nach einem der Ansprüche 1 bis 3, **dadurch gekennzeichnet, dass** die Tauchtasse (7) mit Haltestangen (17) an einer Ringscheibe (10) des Tauchrohres (6) aufgehängt ist.

5. Vorrichtung nach einem der Ansprüche 1 bis 4, **dadurch gekennzeichnet, dass** sich an der oberen Öffnung der Vorlage (14) eine Gasklappe (15) befindet, mit der die Vorlage (14) gegen die Umhüllung (9) und die Tauchtasse (7) absperrbar ist.

6. Verfahren zum Betreiben einer Koksofenbatterie oder Koksofenbank mit einer Mehrzahl von Koksofenkammern, einer rohgasführenden Rohgasvorlage (14) und an der Rohgasvorlage (14) angeordneten Drosselvorrichtungen (1) zum individuellen Regeln des Gasdruckes in den Verkokungskammern, wobei
• die Drosselvorrichtungen (1) jeweils eine mit Wasser (18) beaufschlagte Tauchtasse (7) mit einem verschließbaren Ablauf aufweisen, und
• die Verkokungskammern mit der Rohgasvorlage (14) durch Steigrohre (2) mit Krümmern (4) verbunden sind, die als Tauchrohre (6) in den Tauchtassen (7) der Drosselvorrichtungen (1) enden, und
• Drosselvorrichtungen (1) verwendet werden, die einen von einem Stellantrieb vertikal verstellbaren Überlauf zur Regelung des Flüssigkeitsspiegels (7b) in der Tauchtasse (7) aufweisen,
**dadurch gekennzeichnet, dass**
• die Regelung des Druckes der Koksofenkammer durch Verwendung eines Regelorgans (8b) zur Kontrolle des Gasdruckes einer Koksofenkammer ohne dehnungsbedingte Abweichung der Tauchtasse (7) und des Regelorgans (8b) aus der Regelanordnung geschieht, indem
• das Tauchrohr (6) und die Tauchtasse (7) von einer Umhüllung (9) umgeben sind, welche an dem Tauchrohr (6) über eine Ringscheibe (10) fest montiert ist, und die Umhüllung (9) mit der Tauchtasse (7) einen Ringraum (11) bildet, der als Überlauf für das Wasser aus der Tauchtasse (7) und als Gasweg für das Verkokungsgas (3) dient, wobei
• der Dehnungsausgleich gegen die Vorlage (14) durch die Eintauchung (12) eines an der Umhüllung (9) angeordneten umlaufenden Kranzes (9b) in eine ringförmige Tauchung (12) vorgenommen wird.

7. Verfahren nach Anspruch 6, **dadurch gekennzeichnet, dass** die Druckregelung in mindestens einer Koksofenkammer über eine Messeinrichtung erfolgt, die den Wasserzulauf in die Tauchtasse (7) in Abhängigkeit vom Innendruck der Koksofenkammer regelt.

8. Verfahren nach einem der Ansprüche 6 oder 7, **dadurch gekennzeichnet, dass** die ringförmige Tauchung (12) mit einer Füllung aus Wasser versehen ist.

9. Verfahren nach einem der Ansprüche 6 oder 7, **dadurch gekennzeichnet, dass** die ringförmige Tauchung (12) mit einer Füllung aus Bitumen versehen ist.

10. Verfahren nach einem der Ansprüche 6 oder 7, **dadurch gekennzeichnet, dass** die ringförmige Tauchung (12) mit einer Füllung versehen ist, die eine Silikonverbindung enthält.

## Claims

1. Device (1) for setting up a control element for controlling the gas pressure of a coke-oven chamber without expansion-induced deviation from the control assembly, comprising
• a standpipe (2), which rises vertically from a coke-oven chamber and is connected to a bend (4), which branches off from the standpipe (2) in a lateral direction and goes over vertically downwards into a dip pipe (6), which, as a crown pipe (6a), is provided at the end with indented or notched formations in the rims and an inlet for water (18), and
• a dip cup (7), which has a downwardly tapered bottom, contains at its lower end, extending from the bottom, an outlet for the water (18a) and is open at the top, and
• a closure plug (8), which passes through the dip pipe (6) and closes in a controllable manner the outlet from the water dip seal (7b) of the dip cup (7) into the gas collecting main (14) arranged beneath, and
• a crude gas-conducting collecting main (14), into which the water from the dip cup (7) flows by overflow or opening of the closure plug (8), **characterized in that**
• the dip cup (7) and the dip pipe (6) with the crown pipe (6a) at its end are provided with a fixed enclosure (9), which with the dip cup (7) forms an annular space (11), which is suitable as an overflow for the water and as a gas passage (5) from the dip cup (7) into the gas collecting main (14), and
• the enclosure (9) is provided with a rim (9b), which dips into an annular dip seal (12) on the gas collecting main (14), so that expansions or misalignments between the gas collecting main (14) and the enclosure (9) can be compensated.

2. Device according to Claim 1, **characterized in that** the enclosure (9) is formed by a cast body or shaped sheet metal body.

3. Device according to either of Claims 1 and 2, **characterized in that** the connection between the enclosure (9) and the dip pipe (6) takes place by means of a flanged connection (13).

4. Device according to one of Claims 1 to 3, **characterized in that** the dip cup (7) is suspended by means of holding rods (17) from an annular disc (10) of the dip pipe (6).

5. Device according to one of Claims 1 to 4, **characterized in that** the upper opening of the gas collecting main (14) is equipped with a gas flap (15), by which the gas collecting main (14) can be shut off against the enclosure (9) and the dip cup (7).

6. Method for operating a coke-oven battery or coke-oven bank comprising a plurality of coke-oven chambers, a crude-gas conducting crude-gas collecting main (14) and throttle devices (1) arranged on the crude-gas collecting main (14) for individually controlling the gas pressure in the coking chambers, wherein
• each of the throttle devices (1) has a dip cup (7), which is impinged with water (18) and has a closable outlet, and
• the coking chambers are connected to the crude-gas collecting main (14) by standpipes (2) with bends (4), which end as dip pipes (6) in the dip cups (7) of the throttle devices (1), and
• throttle devices (1) that have a vertically actuator-adjustable overflow for controlling the liquid level (7b) in the dip cup (7) are used, **characterized in that**
• the pressure in the coke-oven chamber is controlled by using a control element (8b) for controlling the gas pressure in a coke-oven chamber without expansion-induced deviation of the dip cup (7) and the control element (8b) from the control assembly, by
• the dip pipe (6) and the dip cup (7) being surrounded by an enclosure (9), which is fixedly mounted on the dip pipe (6) by way of an annular disc (10), and the enclosure (9) with the dip cup (7) forming an annular space (11), which serves as an overflow for the water from the dip cup (7) and as a gas passage for the coking gas (3), wherein
• the expansion with respect to the gas collecting main (14) is compensated by the dipping (12) of a peripheral rim (9b), arranged on the enclosure (9), into an annular dip seal (12).

7. Method according to Claim 6, **characterized in that** the pressure in at least one coke-oven chamber is controlled by means of a measuring device, which adjusts the water supply into the dip cup (7) in dependence on the internal pressure of the coke-oven chamber.

8. Method according to either of Claims 6 and 7, **characterized in that** the annular dip seal (12) is provided with a filling of water.

9. Method according to either of Claims 6 and 7, **characterized in that** the annular dip seal (12) is provided with a filling of bitumen.

10. Method according to either of Claims 6 and 7, **characterized in that** the annular dip seal (12) is provided with a filling that contains a silicone compound.

## Revendications

1. Dispositif (1) pour installer un organe de réglage en vue de contrôler la pression de gaz d'une chambre de four à coke sans écart dû à la dilatation du dispositif de réglage, comprenant :
- un tube montant (2) réalisé de façon à monter à la verticale hors d'une chambre de four à coke et relié à un coude (4) bifurquant dans la direction latérale en partant du tube montant (2) et se transformant verticalement vers l'arrière en un tube plongeur (6) doté, du côté d'extrémité, sous la forme d'un tube à couronne (6a), de moulages en zigzag ou en forme de niches réalisés dans les bordures et doté d'une admission pour l'eau (18) ; et
- une tasse plongeuse (7) possédant un fond orienté vers l'arrière et contenant en partant du fond, au niveau de son extrémité inférieure, un orifice de sortie pour l'eau (18a) et étant ouverte vers le haut ; et
- un bouchon de fermeture (8) traversant le tube plongeur (6) et fermant de façon réglable l'orifice de sortie de siphon d'eau (7b) de la tasse plongeuse (7) dans le collecteur (14) placé dessous ; et
- un collecteur (14) de guidage de gaz brut dans lequel l'eau provenant de la tasse plongeuse (7) s'écoule à travers le déversoir ou l'ouverture du bouchon de fermeture (8) ;
**caractérisé en ce que** :
- la tasse plongeuse (7) et le tube plongeur (6) avec le tube à couronne (6a) placé du côté d'extrémité sont pourvus d'une enveloppe (9) disposée fixement formant avec la tasse plongeuse (7) un espace annulaire (11) servant de déversoir pour l'eau et adapté pour prendre la forme d'un chemin de gaz (5) allant de la tasse plongeuse (7) au collecteur (14) ; et
- l'enveloppe (9) étant pourvue d'une couronne (9b) plongeant dans un siphon (12) de forme annulaire réalisé sur le collecteur (14), de façon à compenser les dilatations ou les décalages se produisant entre le collecteur (14) et l'enveloppe (9).

2. Dispositif selon la revendication 1, **caractérisé en ce que** l'enveloppe (9) est réalisée à partir d'un corps coulé ou d'une pièce moulée de corps en tôle.

3. Dispositif selon l'une quelconque des revendications 1 ou 2, **caractérisé en ce que** la liaison entre l'enveloppe (9) et le tube plongeur (6) est réalisée par le biais d'une jonction par bride (13).

4. Dispositif selon l'une quelconque des revendications 1 à 3, **caractérisé en ce que** la tasse plongeuse (7) est accrochée avec des barres de maintien (17) à un disque annulaire (10) du tube plongeur (6).

5. Dispositif selon l'une quelconque des revendications 1 à 4, **caractérisé en ce qu'**un clapet à gaz (15) à l'aide duquel le collecteur (14) peut être bloqué contre l'enveloppe (9) et la tasse plongeuse (7) se trouve au niveau de l'ouverture supérieure du collecteur (14).

6. Procédé de fonctionnement d'une batterie de fours à coke ou d'un banc de fours à coke dotés d'une pluralité de chambres de four à coke, d'un collecteur de gaz brut (14) guidant le gaz brut et de dispositifs d'étranglement (1) disposés au niveau du collecteur de gaz brut (14) afin d'effectuer un réglage individuel de la pression de gaz dans les chambres de précokage ;
- les dispositifs d'étranglement (1) comportant respectivement une tasse plongeuse (7) alimentée en eau (18) avec une évacuation pouvant être refermée ; et
- les chambres de précokage étant reliées au collecteur de gaz brut (14) par les tubes montants (2) dotés de coudes (4) se terminant sous la forme de tubes plongeurs (6) placés dans les tasses plongeuses (7) des dispositifs d'étranglement (1) ; et
- des dispositifs d'étranglement (1) étant utilisés, ces dispositifs comportant un déversoir pouvant être déplacé à la verticale par un entraînement de réglage pour régler le miroir de fluide (7b) se trouvant dans la tasse plongeuse (7) ;
**caractérisé en ce que** :
- le réglage de la pression de la chambre de four à coke par utilisation d'un organe de réglage (8b) en vue de contrôler la pression de gaz d'une chambre de four à coke se produit sans écart dû à la dilatation de la tasse plongeuse (7) et de l'organe de réglage (8b) du dispositif de réglage **en ce que** :
- le tube plongeur (6) et la tasse plongeuse (7) sont ceints par une enveloppe (9) montée fixement au tube plongeur (6) au-dessus d'un disque annulaire (10) et l'enveloppe (9) formant avec la tasse plongeuse (7) un espace annulaire (11) servant de déversoir pour l'eau provenant de la tasse plongeuse (7) et de chemin de gaz pour le gaz de précokage (3) ;
- la compensation de la dilatation s'exerçant contre le collecteur (14) est prise en compte par immersion (12) d'une couronne (9b) périphérique disposée au niveau de l'enveloppe (9) dans un siphon (12) de forme annulaire.

7. Procédé selon la revendication 6, **caractérisé en ce que** le réglage de pression se produit dans au moins une chambre de four à coke via un dispositif de mesure régulant l'amenée d'eau dans la tasse plongeuse (7) en fonction de la pression intérieure de la chambre de four à coke.

8. Procédé selon l'une quelconque des revendications 6 ou 7, **caractérisé en ce que** le siphon (12) de forme annulaire est pourvu d'un remplissage en eau.

9. Procédé selon l'une quelconque des revendications 6 ou 7, **caractérisé en ce que** le siphon (12) de forme annulaire est pourvu d'un remplissage en bitume.

10. Procédé selon l'une quelconque des revendications 6 ou 7, **caractérisé en ce que** le siphon (12) de forme annulaire est pourvu d'un remplissage contenant un joint en silicone.
